## Europäisches Patentamt

## European Patent Office

## Office européen des brevets

(19)

(11) Veröffentlichungsnummer: **0 048 958**
**B1**

(12) # EUROPÄISCHE PATENTSCHRIFT

(45) Veröffentlichungstag der Patentschrift:
**22.04.87**

(51) Int. Cl.⁴: **G 01 S 15/93,** G 01 S 15/18

(21) Anmeldenummer: **81107596.9**

(22) Anmeldetag: **24.09.81**

(54) **Schaltungsanordnung zur Ermittlung und Anzeige der Unterschreitung vorgegebener Mindestabstände zwischen einem Fahrzeug und einem Hindernis.**

(30) Priorität: **25.09.80 DE 3036081**

(43) Veröffentlichungstag der Anmeldung:
**07.04.82 Patentblatt 82/14**

(45) Bekanntmachung des Hinweises auf die Patenterteilung:
**22.04.87 Patentblatt 87/17**

(84) Benannte Vertragsstaaten:
**AT BE CH DE FR GB IT LI LU NL SE**

(56) Entgegenhaltungen:
**DE - A - 2 045 368**
**FR - A - 2 427 221**
**US - A - 3 742 434**
**US - A - 3 793 618**
**US - A - 3 842 397**
**US - A - 3 852 705**
**US - A - 4 015 232**
**US - A - 4 240 152**

(73) Patentinhaber: **Gelhard, Egon, Zum Kelderberg 5,
D-5352 Zülpich-Dürscheven (DE)**

(72) Erfinder: **Gelhard, Egon, Zum Kelderberg 5,
D-5352 Zülpich-Dürscheven (DE)**

(74) Vertreter: **Zipse & Habersack, Lessingstrasse 12,
D-7570 Baden-Baden (DE)**

## Beschreibung

Die Erfindung betrifft eine Schaltungsanordnung zur Ermittlung und Anzeige der Unterschreitung vorgegebener Mindestabstände zwischen einem Fahrzeug und einem Hindernis der im Oberbegriff des Patentanspruchs 1 angegebenen Art.

In der US-A-3 793 618 ist ein Alarmsystem für ein Tiefenmessgerät beschrieben, bei dem eine piezoelektrische Ultraschallübertragungsanlage verwendet wird, die an der Aussenseite eines Schiffes befestigt ist und Ultraschallsignale aussendet, die vom Grund reflektiert, durch einen Wandler aufgenommen und einer Elektronik zugeführt werden, die bei Unterschreiten einer zu geringen Tiefe in einer Alarmanordnung einen Alarm auslöst.

Eine besondere Ausbildung des in der Schaltungsanordnung verwendeten Ultraschallwandlers ist aus der vorbekannten Schrift nicht zu entnehmen.

Aus der US-A-3 742 434 ist ein automatisches Türöffnungssystem bekanntgeworden, das auf der Basis einer akustischen Gegenstandserkennung arbeitet. Auch bei diesem vorbekannten System werden von einem Wandler Ultraschallschwingungen ausgesendet, die von einem Gegenstand oder einer Person reflektiert werden. Die reflektierten Signale werden im Wandler empfangen und einer Auswerteelektronik zur Öffnung der Tür zugeführt. Der Wandler ist bei dem vorbekannten System in einem trapezförmigen Gehäuse untergebracht, dessen schräge Innenwände die gewünschten Reflexionen der aufgenommenen Ultraschallschwingungen, die auf den Wandler gerichtet sind, erzeugen.

Der vorliegenden Erfindung liegt die Aufgabe zugrunde, eine Schaltungsanordnung der im Oberbegriff des Patentanspruches 1 angegebenen Art so zu verbessern, dass das Prinzip der Ultraschallmessung durch Aussenden und Reflexion von Ultraschallwellen zur Ermittlung und Anzeige der Unterschreitung vorgegebener Mindestabstände zwischen einem Fahrzeug und einem Hindernis mit grösstmöglicher Betriebssicherheit angewendet werden kann. Hierbei ist es ein Ziel der erfindungsgemässen Schaltungsanordnung, den Einfluss von Fahrzeug- und Fahrbahnreflexionen auf das Messergebnis auszuschalten, wobei in jedem Falle Fahrbahn- und Bodenreflexionen oder Reflexionen an fahrzeugeigenen Bauteilen, wie überstehende Aufbauten usw., das Messergebnis nicht verfälschen.

Zur Lösung der gestellten Aufgabe wird eine Schaltungsanordnung gemäss Patentanspruch 1 vorgeschlagen.

Durch die topfförmige Ausbildung des Gehäuses mit dem aus einem Topfwandler bestehenden Ultraschallwandler und die Verwendung von schallschluckendem Material für das Gehäuse wird zunächst der Vorteil erreicht, dass eine optimale Anpassung der ausgestrahlten und reflektierten Ultraschallkeule erzielt wird und dass Fahrzeug- und Fahrbahnreflexionen weitgehend ausgeschaltet werden. Dies wird noch dadurch unterstützt, dass das Gehäuse auf seiner offenen, der Schallabstrahlung und dem Schallempfang dienenden Seite mit einer Verlängerung seiner Mantelfläche versehen ist, welche sich über einen Teil des Umfangs der Mantelfläche in Schallabstrahlungsrichtung erstreckt und eine vorstehende Lippe des Gehäuses bildet. Diese Lippe ist so geformt, dass sich eine von Fahrbahn- und Fahrzeugreflexionen unbeeinflusste Abstrahl- und Empfangscharakteristik ergibt. Durch die entsprechende Form der Lippe kann eine Beschneidung der Ausbreitungszonen an den jeweiligen Anbringungsort des Wandlers angepasst werden.

Gemäss Patentanspruch 2 wird die gleiche Aufgabenstellung gelöst, und zwar in der Weise, dass der Ultraschallwandler als Topfwandler ausgebildet ist, auf dessen Membran eine ringförmige Schallblende angeordnet ist. Die Schallblende besteht aus einem Trägerscheibchen und einem auf der der Membran zugekehrten Seite des Trägerscheibchens angeordneten Absorbermaterial. Dabei ist die Blendenöffnung so geformt, dass sich eine von Fahrbahn- und Fahrzeugreflexionen unbeeinflusste Abstrahl- und Empfangscharakteristik ergibt.

Anhand der Zeichnungen soll die erfindungsgemässe Schaltungsanordnung näher erläutert werden.

In den Zeichnungen zeigt:

Fig. 1 ein Blockschaltbild der Schaltungsanordnung gemäss der Erfindung.

Fig. 2 zeigt ein Detailschaltbild mit konkreten Bauelementen der Schaltungsanordnung gemäss der Erfindung.

Fig. 3a zeigt einen Vertikalschnitt durch ein Gehäuse mit einem Topfwandler.

Fig. 3b zeigt eine Draufsicht auf das Gehäuse gemäss Fig. 3a.

Fig. 3c zeigt eine Abwicklung des Gehäuseteiles von Fig. 3b.

Fig. 4a zeigt einen Schnitt durch einen Topfwandler.

Fig. 4b zeigt eine Draufsicht auf den Topfwandler gemäss Fig. 4a.

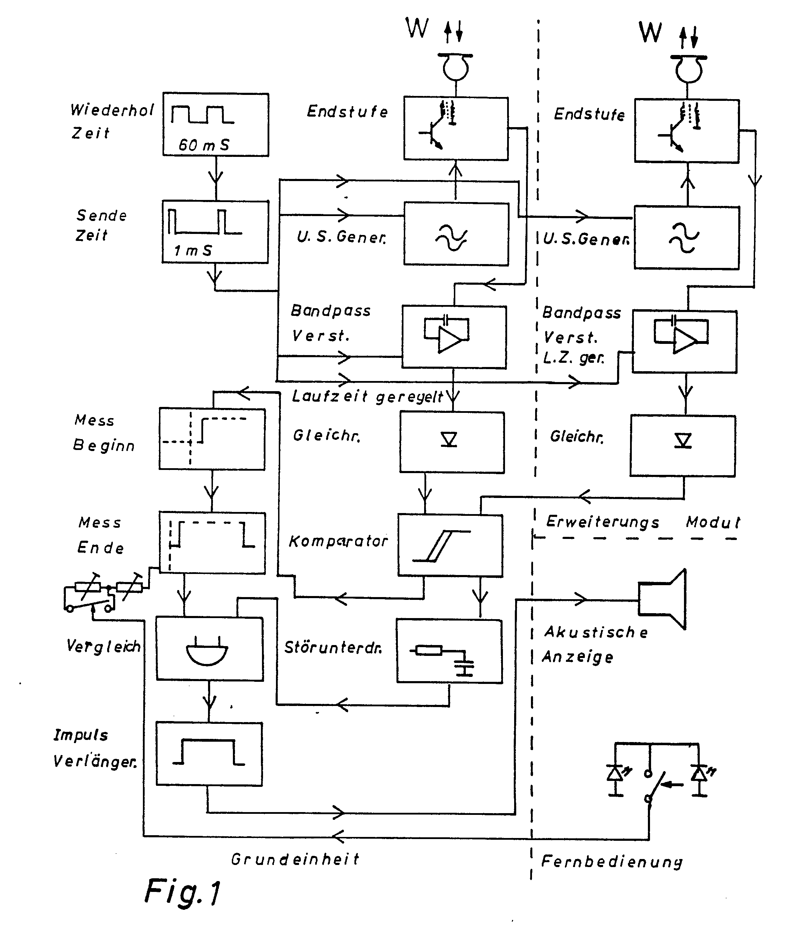

Wie sich aus Fig. 1, also dem Blockschaltbild der Schaltungsanordnung gemäss der Erfindung, ergibt, wird mit einer Wiederholzeit von 60 mS und einer Sendezeit von 1 mS ein US-Generator gesteuert, der mit einer Endstufe und mit einem US-Sender-Empfänger-Wandler W verbunden ist. Die genannte Endstufe steht über einen Bandpass-Verstärker und einen Gleichrichter mit einem Komparator in Verbindung, dessen Ausgänge mit Schaltungsanordnungen für den Messbeginn und das Messende sowie die Störunterdrükkung verbunden sind.

Beide Schaltungsanordnungen führen zu einem Vergleicher und einem Impulsverlängerer, dessen Ausgang mit der akustischen Anzeige in Verbindung steht. An die Schaltungsanordnung für das Messende kann noch eine Fernbedienung angeschlossen werden.

Mit der gleichen Wiederhol- und Sendezeit wird ein zweiter US-Generator angesteuert, der zu einem Ansteck-Modul führt, das in gleicher Weise aufgebaut ist und ebenfalls mit dem Komparator verbunden ist.

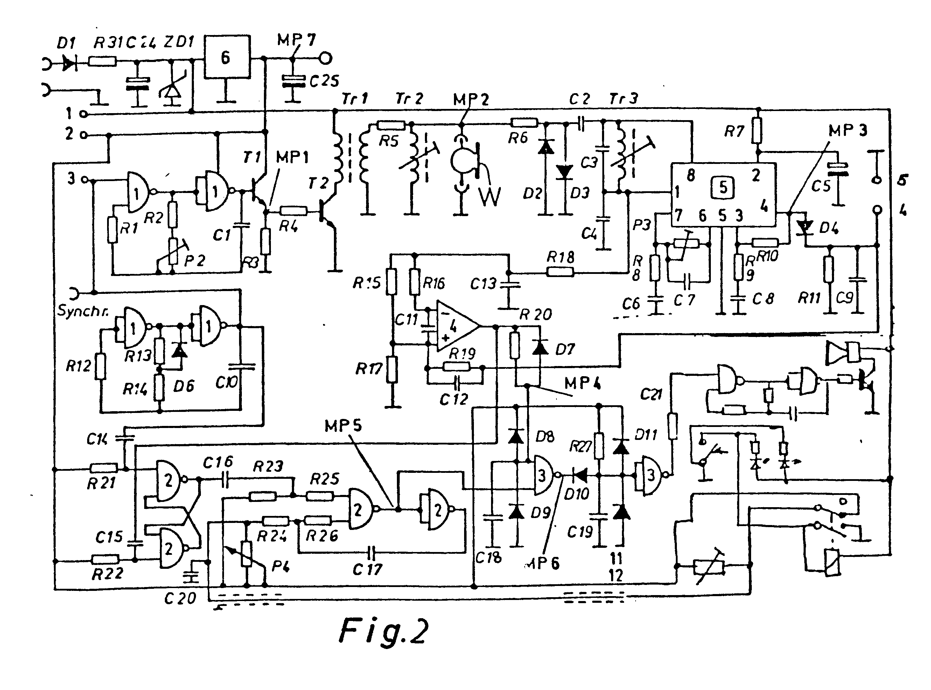

Wie sich aus Fig. 2, der im Detail dargestellten Schaltungsanordnung, ergibt, erzeugt ein aus zwei Gattern 1 gebildeter, astabiler Multivibrator mit ungleichem Puls-Pausenverhältnis 1 mS-Impulse mit 60 mS Pausendauer. Diese Impulse steuern einen ähnlich aufgebauten, zweiten astabilen Multivibrator, der auf der Frequenz des Wandlers W arbeitet, so dass am Ausgang desselben alle 60 mS ein 1 mS langes Signal mit der Wandlerfrequenz entsteht. Die genaue Wandlerfrequenz kann mit P2 eingestellt werden.

Am Ausgang des ersten Multivibrators kann ein Triggerimpuls zur externen Synchronisation, beispielsweise des zweiten Ansteckmoduls, abgenommen werden.

Das H.F.-Signal wird verstärkt und auf 120 V$^{ss}$ hochtransformiert und über den Wandler W abgestrahlt. Der Trafo TR1 ist ein Breitbandübertrager, und der Trafo TR2 wird auf die Wandlerfrequenz abgestimmt.

Über R6, C2 werden alle von dem gleichen Wandler empfangenen Echosignale auf den selektiven Eingangskreis des übersteuerungsfesten H.F.-Verstärkers IC-5 geleitet. Die Begrenzerdioden D2, D3 verhindern eine zu hohe Eingangsspannung am Verstärker.

Nach Gleichrichtung und Siebung werden die Echosignale im Komparator IC-4 zu Rechtecksignalen konstanter Amplitude aufgearbeitet und dem Siebglied R20-C18 zugeführt.

Die Schwelle des Komparators wird von der Arbeitspunktstabilisierung des H.F.-Verstärkers abgeleitet.

Nach Unterdrückung zu schmaler Impulse im Siebglied gelangen die Echosignale zum Vergleicher (erstes Gatter von IC-3). Dieser liefert immer dann ein negatives Auslösesignal zum Anzeigeteil, wenn ein Echo in das Messfenster fällt.

Dieses Messfenster wird von einem Monoflop (IC-2) erzeugt, dessen Zeit mit P4 von 0,1–15 mS eingestellt werden kann. Diese Zeit stellt das Ende des Fensters dar und ist gleichzeitig die Entfernungseinstellung.

Der Anfang des Fensters wird durch das R-S-Flip-Flop vorgegeben (linkes Gatter von IC-2). Dieses kippt immer dann um, wenn das Signal am Wandler W abgeklungen ist und wird vom Synchronimpuls am Ende des Sendesignals zurückgestellt. Dadurch ist sichergestellt, dass das Messfenster niemals geöffnet wird, wenn der Empfangsverstärker ein noch nicht abgeklungenes Sendesignal aufnimmt.

Das Auslösesignal wird mit R27-C19 verlängert und nach Verstärkung zum Ausgang geleitet. Über ein ansteckbares vierpoliges Kabel setzt das verlängerte Auslösesignal den in der Fernbedienung enthaltenen Tongenerator in Betrieb, der über einen Verstärker mit dem Lautsprecher verbunden ist. Durch die Verlängerung des Auslösesignals ist gewährleistet, dass die akustische Anzeige immer eine Mindestdauer hat.

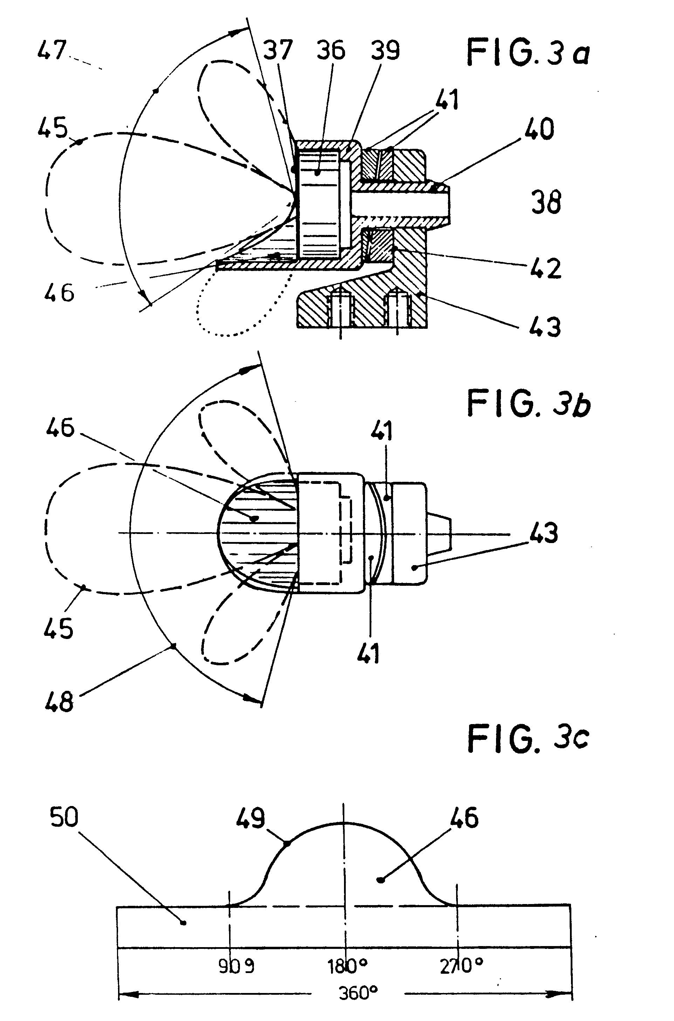

Fig. 3a zeigt einen nicht massstäblichen, vereinfachten Vertikalschnitt durch ein US-Sender-Empfänger-Wandlergehäuse mit direkter Beaufschlagung, wobei dessen Topfwandler 36 mit seiner Membran 37 und seinen Anschlussleitungen 38 in ein topfförmiges Gehäuse 39 aus witterungsbeständigem Kunststoff eingesetzt ist. Auf den durchbohrenden Befestigungszapfen 40 sind zwei unparallele Scheiben 41 aufgesetzt, durch deren Zueinanderverdrehung in Verbindung mit der senkrechten Anschlussfläche 42 des Halters 43 sich die Mittelachse 44 des Systems horizontal und vertikal ausrichten lässt. Der Halter 43 kann am Kraftfahrzeug, beispielsweise an der Stossstange oder an der Karosserie, befestigt werden.

Die Grösse des Sende- und Empfangsbereiches, die zunächst durch die Ausdehnung der Sende- und Empfangskeule 45 des Wandlers gegeben ist, wird durch eine Lippe 46 am Gehäuseaussendurchmesser so begrenzt, dass sich ein Sende- und Empfangsbereich in der Vertikalen gemäss dem vertikalen Öffnungswinkel 47 ergibt.

Fig. 3b zeigt die Draufsicht auf den Sensor gemäss Fig. 3a und gibt den horizontalen Öffnungswinkel 48 an.

Fig. 3c zeigt eine typische Abwicklungskontur 49 der Lippe 46, die mit dem Mantel des Gehäuses 50 eine Einheit bildet.

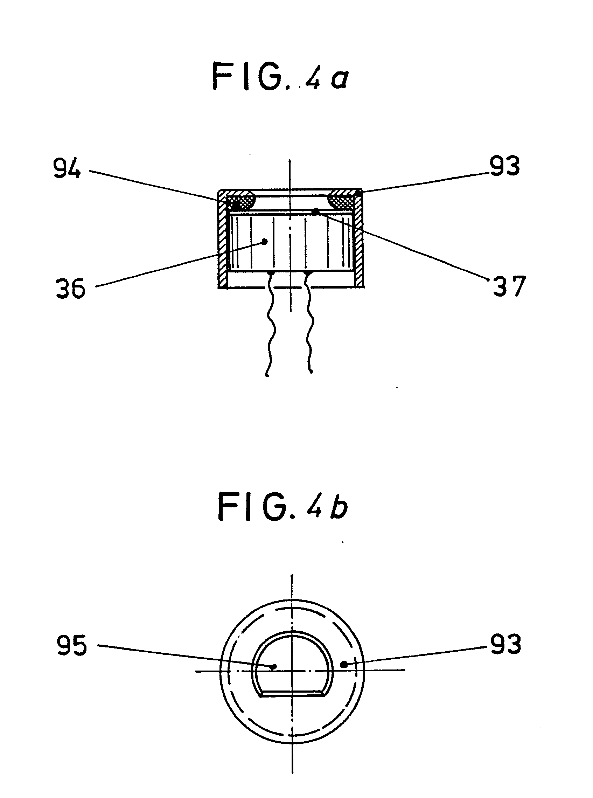

Fig. 4a zeigt einen nicht massstäblichen, vereinfachten Querschnitt durch einen Topfwandler 46, auf dessen Membran 37 eine ringförmige Schallblende angeordnet ist, die aus einem Trägerscheibchen 93 und einem auf der der Membran zugekehrten Seite des Trägerscheibchens angeordneten Absorbermaterial 94, beispielsweise einer Absorberscheibe, besteht. Die Blendenöffnung ist durch das Blendenfenster 95 so geformt, dass die Sende- und Empfangskeule eingeengt wird und sich eine von Fahrbahn- und Fahrzeugreflexionen unbeeinflusste Abstrahl- und Empfangscharakteristik ergibt.

Fig. 4b zeigt eine Draufsicht auf den in Fig. 4a dargestellten Topfwandler mit dem Trägerscheibchen 93 und dem Blendenfenster 95.

**Patentansprüche**

1. Schaltungsanordnung zur Ermittlung und Anzeige der Unterschreitung vorgegebener Mindestabstände zwischen einem Fahrzeug und einem Hindernis, mit

a) einem Sender (1, TR1, TR2) für elektrische Hochfrequenzimpulse einer im Ultraschallbereich liegenden Trägerfrequenz,

b) einem in einem Gehäuse angeordneten Ultraschallwandler (W) zur Umsetzung der elektrischen Hochfrequenzimpulse in Ultraschallsendeimpulse und zur Umsetzung von nach Reflexion an einem Hindernis empfangenen Messimpulsen,

c) einer Empfangsschaltung, welche eine HF-Verstärkerstufe (5) und eine nachgeschaltete Gleichrichterstufe (D4) enthält,

d) einer an die Empfangsschaltung angeschlossenen Auswerteelektronik, welche umfasst:

(I) Gatterschaltungen (3) zur Vorgabe eines Zeitfensters für die anzuzeigenden Messimpulse,

(II) Steuerschaltungen (2, P4) zur Festlegung des Beginns des Zeitfensters auf einen Zeitpunkt jeweils nach Abklingen der Hochfrequenzimpulse und zur Festlegung der Dauer des Zeitfensters mittels eines in den Steuerschaltungen enthaltenen Monoflops,

(III) eine Schaltung (R27, C19) zum Verlängern derjenigen Messimpulse, die die Gatterschaltungen passiert haben,

(IV) eine Anzeigeeinrichtung für die innerhalb des Zeitfensters auftretenden, verlängerten Messimpulse,

dadurch gekennzeichnet, dass das Gehäuse (39) des aus einem Topfwandler (36) bestehenden Ultraschallwandlers topfförmig ausgebildet ist, aus schallschluckendem Material besteht und auf seiner offenen, der Schallabstrahlung und dem Schallempfang dienenden Seite mit einer Verlängerung seiner Mantelfläche versehen ist, welche sich über einen Teil des Umfangs der Mantelfläche in Schallabstrahlungsrichtung erstreckt und eine vorstehende Lippe (46) des Gehäuses bildet, die so geformt ist, dass sich eine von Fahrbahn- und Fahrzeugreflexionen unbeeinflusste Abstrahl- und Empfangscharakteristik ergibt.

2. Schaltungsanordnung zur Ermittlung und Anzeige der Unterschreitung vorgegebener Mindestabstände zwischen einem Fahrzeug und einem Hindernis, mit

a) einem Sender (1, TR1, TR2) für elektrische Hochfrequenzimpulse einer im Ultraschallbereich liegenden Trägerfrequenz,

b) einem in einem Gehäuse angeordneten Ultraschallwandler (W) zur Umsetzung der elektrischen Hochfrequenzimpulse in Ultraschallsendeimpulse und zur Umsetzung von nach Reflexion an einem Hindernis empfangenen Messimpulsen,

c) einer Empfangsschaltung, welche eine HF-Verstärkerstufe (5) und eine nachgeschaltete Gleichrichterstufe (D4) enthält,

d) einer an die Empfangsschaltung angeschlossenen Auswerteelektronik, welche umfasst:

(I) Gatterschaltungen (3) zur Vorgabe eines Zeitfensters für die anzuzeigenden Messimpulse,

(II) Steuerschaltungen (2, P4) zur Festlegung des Beginns des Zeitfensters auf einen Zeitpunkt jeweils nach Abklingen der Hochfrequenzimpulse und zur Festlegung der Dauer des Zeitfensters mittels eines in den Steuerschaltungen enthaltenen Monoflops,

(III) eine Schaltung (R27, C19) zum Verlängern derjenigen Messimpulse, die die Gatterschaltungen passiert haben,

(IV) eine Anzeigeeinrichtung für die innerhalb des Zeitfensters auftretenden, verlängerten Messimpulse,

dadurch gekennzeichnet, dass der Ultraschallwandler als Topfwandler (36) ausgebildet ist, auf dessen Membran (37) eine ringförmige Schallblende angeordnet ist, die aus einem Trägerscheibchen (93) und einem auf der der Membran zugekehrten Seite des Trägerscheibchens angeordneten Absorbermaterial (94) besteht, und deren Blendenöffnung so geformt ist, dass sich eine von Fahrbahn- und Fahrzeugreflexionen unbeeinflusste Abstrahl- und Empfangscharakteristik ergibt.

**Claims**

1. Circuit for determining and displaying when the distance between a vehicle and an obstacle falls below predetermined minimum values, with

a) a transmitter (1, TR1, TR2) for electrical high-frequency impulses of a carrier frequency lying in the ultrasonic range,

b) an ultrasonic transducer (W) arranged in a housing for converting the electrical high-frequency impulses into ultrasonic transmission impulses and for converting measurement impulses received after reflection on an obstacle,

c) a receiving circuit, which contains an HF-amplifier stage (5) and a downstream rectifier stage (D4),

d) an electronic evaluation system, connected to the receiving circuit, which comprises:

(I) gate circuits (3) for presetting a time window for the measurement impulses to be displayed,

(II) control circuits (2, P4) for setting the beginning of the time window at a point in time after the fading of the high-frequency impulses and for setting the duration of the time window by means of a monoflop contained in the control circuits,

(III) a circuit (R27, C19) for extending those measurement impulses which have passed through the gate circuits,

(IV) a display device for the extended measurement impulses arising within the time window, characterised in that the housing (39) of the ultrasonic transducer, which consists of a cup-shaped transducer (36), is formed cup-shaped, consists of a sound-absorbent material and on its open side, which serves as the sound radiating and sound receiving side, is provided with an extension of its outer surface, which extends over a part of the extent of the outer surface in the sound-radiating direction and forms a projecting lip (46) of the casing which is so shaped as to afford a radiating and receiving characteristic unimpeded by roadway and vehicle reflections.

2. Circuit for determining and displaying when the distance between a vehicle and an obstacle falls below predetermined minimum values, with

a) a transmitter (1, TR1, TR2) for electrical high-frequency impulses of a carrier frequency lying in the ultrasonic range,

b) an ultrasonic transducer (W) arranged in a housing for converting the electrical high-frequency impulses into ultrasonic transmission impulses and for converting measurement impulses received after reflection on an obstacle,

c) a receiving circuit, which contains an HF-amplifier stage (5) and a downstream rectifier stage (D4),

d) an electronic evaluation system, connected to the receiving circuit, which comprises:

(I) gate circuits (3) for presetting a time window for the measurement impulses to be displayed,

(II) control circuits (2, P4) for setting the beginning of the time window at a point in time after the fading of the high-frequency impulses and for setting the duration of the time window by means of a monoflop contained in the control circuits,

(III) a circuit (R27, C19) for extending those measurement impulses which have passed through the gate circuits,

(IV) a display device for the extended measurement impulses arising within the time window, characterised in that the ultrasonic converter is formed as a cup-shaped transducer (36), on the diaphragm (37) of which is arranged an annular sound-restrictor, which consists of a small carrier disc (93) and an absorbent material (94) arranged on that side of the carrier disc which faces the diaphragm and whose restrictor opening is so shaped as to afford a radiating and receiving characteristic unimpeded by roadway and vehicle reflections.

**Revendications**

1. Circuit pour déterminer et afficher le dépassement d'écarts minimaux prescrits entre un véhicule et un obstacle, comportant:

a) un émetteur (1, TR1, TR2) pour des impulsions électriques à haute fréquence d'une fréquence porteuse se situant dans la gamme des ultrasons,

b) un transducteur ultrasonore (W) disposé dans un boîtier, pour la conversion des impulsions électriques à haute fréquence en impulsions ultrasonores d'émission et pour la conversion d'impulsions de mesure reçues après réflexion sur un obstacle,

c) un circuit de réception qui contient un étage amplificateur HF (5) et un étage redresseur (D4) branché à la suite,

d) une électronique d'interprétation raccordée au circuit de réception, qui comprend:

(I) des circuits de porte (3) pour la prescription d'une fenêtre de temps pour les impulsions de mesure à afficher,

(II) des circuits de commande (2, P4) pour la fixation du début de la fenêtre de temps à un moment qui se situe chaque fois après amortissement des impulsions à haute fréquence et pour la fixation de la durée de la fenêtre de temps au moyen d'un monoflop contenu dans les circuits de commande,

(III) un circuit (R27, C19) pour l'allongement de celles des impulsions de mesure qui ont passé par les circuits de porte,

(IV) un dispositif d'affichage pour les impulsions de mesure allongées apparaissant à l'intérieur de la fenêtre de temps,

caractérisé en ce que le boîtier (39) du transducteur ultrasonore formé d'un transducteur en cuve (36) est conçu en forme de cuve, est formé de matière insonorisante et est muni, à son côté ouvert servant à l'émission de son et à la réception de son, d'un prolongement de sa surface latérale qui s'etend sur une partie de la circonférence de la surface latérale dans la direction d'émission du son et forme une lèvre saillante (46) du boîtier, qui est de forme telle que l'on obtient une caractéristique d'émission et de réception non influencée par des réflexions de la chaussée et du véhicule.

2. Circuit pour déterminer et afficher le dépassement d'écarts minimaux prescrits entre un véhicule et un obstacle, comportant

a) un émetteur (1, TR1, TR2) pour des impulsions électriques à haute fréquence d'une fréquence porteuse se situant dans la gamme des ultrasons,

b) un transducteur ultrasonore (W) disposé dans un boîtier, pour la conversion des impulsions électriques à haute fréquence en impulsions ultrasonores d'émission et pour la conversion d'impulsions de mesure reçues après réflexion sur un obstacle,

c) un circuit de réception qui contient un étage amplificateur HF (5) et un étage redresseur (D4) branché à la suite,

d) une électronique d'interprétation raccordée au circuit de réception, qui comprend:

(I) des circuits de porte (3) pour la prescription d'une fenêtre de temps pour les impulsions de mesure à afficher,

(II) des circuits de commande (2, P4) pour la fixation du début de la fenêtre de temps à un moment qui se situe chaque fois après amortissement des impulsions à haute fréquence et pour la fixation de la durée de la fenêtre de temps au moyen d'un monoflop contenu dans les circuits de commande,

(III) un circuit (R27, C19) pour l'allongement de celles des impulsions de mesure qui ont passé par les circuits de porte,

(IV) un dispositif d'affichage pour les impulsions de mesure allongées apparaissant à l'intérieur de la fenêtre de temps,

caractérisé en ce que le transducteur ultrasonore est conçu sous forme de transducteur en cuve (36) sur la membrane (37) duquel est disposé un obturateur sonique annulaire qui est formé d'une rondelle porteuse (93) et d'une matière absorbante (94) disposée sur le côté de la rondelle porteuse qui est tourné vers la membrane, et dont l'ouverture d'obturateur est de forme telle que l'on obtient une caractéristique d'émission et de réception non influencée par des réflexions de la chaussée et du véhicule.

W ↑↓    W ↑↓

Wiederhol Zeit    60 mS    Endstufe

Sende Zeit    1 mS    U. S. Gener.    U.S.Gener.    Endstufe

Bandpass Verst.    Bandpass Verst. L.Z. ger.

Laufzeit geregelt

Mess Beginn    Gleichr.    Gleichr.

Mess Ende    Komparator    Erweiterungs Modul

Vergleich    Störunterdr.    Akustische Anzeige

Impuls Verläng.

Grundeinheit    Fernbedienung

## Fig.1

7

**Fig.2**

0 048 958

FIG. 3a

47   37 36 39
41
45   40
38
46   42
43

FIG. 3b

46   41
43
45
41
48

FIG. 3c

50   49   46
90°   180°   270°
360°

11

# FIG. 4a

# FIG. 4b